# DEMANDE DE BREVET EUROPEEN

(11) **EP 2 610 989 A1**
(43) Date de publication de la demande: **03.07.2013**
(21) Numéro de dépôt: 12199399.2
(22) Date de dépôt: 27.12.2012
(51) Int. Cl.: H02J 3/38

(54) **Installation de production d'électricité comportant une pluralité de dispositifs de production d'électricité aptes à transformer de l'énergie mécanique en énergie électrique**

(30) Priorité: 28.12.2011 FR 1162495
(71) Demandeur: Alstom Hydro France, 92300 Levallois Perret (FR)
(72) Inventeur: Bats, Guillaume, 44263 NANTES CEDEX 2 (FR); Rouault, Philippe, 44945 NANTES - Cédex 9 (FR)
(74) Mandataire: Myon, Gérard Jean-Pierre

(57) **Abrégé**

Cette installation de production d'électricité (1) comporte des dispositifs de production d'électricité (14, 16, 18, 20) au moins partiellement immergés dans l'eau, chaque dispositif de production d'électricité comprenant un récepteur mécanique rotatif et un alternateur (22) comprenant au moins un rotor (23) et au moins un stator (24), un rotor de l'alternateur étant apte à être mis en rotation par le récepteur mécanique rotatif. Chaque dispositif de production d'électricité (14, 16, 18, 20) produit un signal électrique alternatif à tension et fréquence variables transporté par un câble électrique de transport (32, 36, 38, 40) au moins partiellement immergé. L'installation comprend en outre un dispositif d'interconnexion (34) auquel sont connectés en entrée, en parallèle, des câbles électriques de transport (32, 36, 38, 40) et qui fournit en sortie un signal électrique conjoint (S") à fréquence et tension variable, dont l'amplitude en courant est égale à la somme des courants d'entrée.

Un câble d'export (12) partiellement immergé relie la sortie du dispositif d'interconnexion (34) à un dispositif de conversion de puissance (46) hors de l'eau, ce dispositif de conversion de puissance (46) étant apte à transformer le signal électrique conjoint (S") en un signal électrique alternatif à fréquence fixe destiné à un réseau de distribution ou de transport d'électricité.

## Description

La présente invention concerne une installation de production d'électricité comportant une pluralité de dispositifs aptes à transformer de l'énergie mécanique en énergie électrique.

L'invention se situe dans le domaine de la production hydroélectrique, en particulier par des dispositifs de production d'électricité qui sont des hydroliennes au moins partiellement immergées dans l'eau, et qui utilisent l'énergie cinétique des courants marins pour la production d'électricité, ou des éoliennes disposées en mer.

Typiquement, une hydrolienne est composée d'un récepteur mécanique ou turbine, à vitesse variable, apte à être mis en rotation par un écoulement de flux hydraulique, par exemple une vague ou un courant dans un cours d'eau, et d'un alternateur lié au récepteur mécanique, qui convertit la puissance mécanique générée par l'écoulement de flux hydraulique en puissance électrique. Un alternateur comprend typiquement un rotor qui est mécaniquement lié à la turbine et mis en rotation par celle-ci et un ou plusieurs stators, la rotation du rotor créant un champ électromagnétique par induction. Ainsi, l'énergie mécanique fournie au rotor est transformée en énergie électrique à courant alternatif. La tension et la fréquence électrique fournies sont proportionnelles à la vitesse de rotation du rotor.

L'alternateur fournit en sortie un signal électrique alternatif, à fréquence variable, la fréquence étant dépendante de la vitesse de rotation de la turbine qui dépend de la vitesse de l'écoulement du flux hydraulique, elle-même variable. Or les réseaux de distribution et de transport d'électricité fonctionnent en fréquence fixe, par exemple 50Hz en Europe et 60Hz aux Etats-Unis.

Pour permettre la fourniture d'électricité pour un réseau de distribution ou de transport, il est connu de coupler un tel alternateur avec un convertisseur d'énergie électrique, apte à convertir le signal électrique issu de l'alternateur en signal électrique à tension fixe et à fréquence fixe, prêt à être fourni au réseau de distribution ou de transport.

Il est connu, actuellement, de connecter un convertisseur d'énergie par alternateur et donc par hydrolienne, afin de tirer le meilleur rendement possible de l'écoulement de flux traversant de chaque hydrolienne et d'acheminer un maximum de puissance électrique vers le réseau de distribution ou de transport. Néanmoins, l'intégration d'un convertisseur de puissance par dispositif de production d'électricité immergé ou partiellement immergé est coûteuse et contraignante, en particulier du fait de la nécessité d'assurer l'étanchéité et un niveau de fiabilité accru d'un tel convertisseur de puissance ; alternativement, l'installation d'un convertisseur de puissance émergé au niveau de chaque machine n'est pas acceptable, ni par le public (impact visuel), ni par les autorités (restriction à la navigation et à la pêche, danger). De plus, la maintenance d'un tel convertisseur de puissance immergé ou partiellement immergé est très coûteuse, car elle nécessite des moyens d'intervention en mer, en particulier de levage de caissons sous-marins qui sont généralement très lourds.

Une solution alternative, consistant à placer, pour chaque alternateur, le convertisseur de puissance associé au sol, est envisageable mais particulièrement coûteuse, car cela nécessite l'utilisation d'un câble de transport de signal électrique alternatif à fréquence variable par dispositif de production d'électricité.

Il est souhaitable de rendre les installations de production d'énergie électrique à base d'hydroliennes moins coûteuses et plus aisées à maintenir.

A cet effet, l'invention propose une installation de production d'électricité comportant une pluralité de dispositifs de production d'électricité au moins partiellement immergés dans l'eau, aptes à transformer de l'énergie mécanique fournie par un écoulement de flux en énergie électrique, chaque dispositif de production d'électricité comprenant un récepteur mécanique rotatif apte à être mis en rotation par l'écoulement de flux et un alternateur comprenant au moins un rotor et au moins un stator, un rotor de l'alternateur étant apte à être mis en rotation par le récepteur mécanique rotatif, **caractérisée en ce que** chaque dispositif de production d'électricité produit un signal électrique alternatif à tension et fréquence variables transporté par un câble électrique de transport au moins partiellement immergé, et en ce que l'installation comprend en outre un dispositif d'interconnexion auquel sont connectés en entrée, en parallèle, les câbles électriques de transport issus de chaque dispositif de production d'électricité, et qui fournit en sortie un signal électrique conjoint, ledit signal électrique conjoint étant un signal électrique alternatif à fréquence et tension variables, dont l'amplitude en courant est égale à la somme des courants d'entrée, un câble d'export partiellement immergé, reliant la sortie du dispositif d'interconnexion à un dispositif de conversion de puissance hors de l'eau, ledit dispositif de conversion de puissance étant apte à transformer le signal électrique conjoint en un signal électrique alternatif à fréquence fixe destiné à un réseau de distribution ou de transport d'électricité.

Avantageusement, les dispositifs de production d'électricité sont connectés électriquement en parallèle, l'énergie électrique étant acheminée après interconnexion via un câble d'export transportant un signal électrique alternatif à fréquence variable, ce qui permet de placer un seul dispositif de conversion de puissance pour plusieurs dispositifs de production d'électricité à distance des dispositifs de production d'électricité, et à terre ou sur une plateforme en mer faisant office de sous-station électrique émergée, donc facilement accessible. Ainsi, le coût de la maintenance du dispositif de conversion de puissance est largement diminué.

La mise en parallèle des dispositifs de production d'énergie entraîne, dans un fonctionnement stable du système, une synchronisation en vitesse et en fréquence des alternateurs. Les inventeurs ont constaté par simulation une faible baisse de rendement en termes de puissance électrique totale fournie par rapport au cas où chaque dispositif de production d'électricité est exploité individuellement.

L'installation de production d'électricité selon l'invention peut également présenter une ou plusieurs des caractéristiques ci-dessous :
- chaque dispositif de production d'électricité comporte un alternateur synchrone à aimants permanents ;
- chaque dispositif de production d'électricité comporte un alternateur asynchrone ;
- chaque dispositif de production d'électricité comprend un transformateur relié à la sortie de l'alternateur et apte à augmenter la tension et à réduire l'intensité de courant du signal électrique fourni par l'alternateur ;
- le dispositif de conversion de puissance comprend un transformateur apte à réduire la tension et à augmenter l'intensité de courant du signal électrique alternatif à fréquence variable fourni en entrée du dispositif de conversion de puissance ;
- le dispositif de conversion de puissance comporte un ensemble de conversion de puissance composé d'au moins un premier convertisseur apte à convertir un signal électrique d'entrée alternatif à fréquence variable et tension variable en un signal électrique de sortie continu, et un deuxième convertisseur, dont l'entrée est branchée sur la sortie dudit premier convertisseur, apte à convertir un signal d'entrée continu en un signal de sortie alternatif à fréquence fixe ;
- ledit ensemble de conversion de puissance comporte un sous-ensemble ou plusieurs sous-ensembles branchés électriquement en parallèle, chaque sous-ensemble comportant un dit premier convertisseur et un dit deuxième convertisseur ;
- ledit dispositif de conversion de puissance comporte des moyens de mise en oeuvre d'une méthode de régulation de puissance, apte à moduler des paramètres du signal électrique conjoint issu dudit dispositif d'interconnexion ; et
- lesdits moyens de mise en oeuvre d'une méthode de régulation de puissance sont aptes à imposer l'intensité de courant du signal électrique conjoint, entraînant une régulation de la moyenne de l'intensité de courant du signal électrique alternatif fourni par

chaque dispositif de production d'électricité et une synchronisation en fréquence desdits signaux électriques alternatifs.

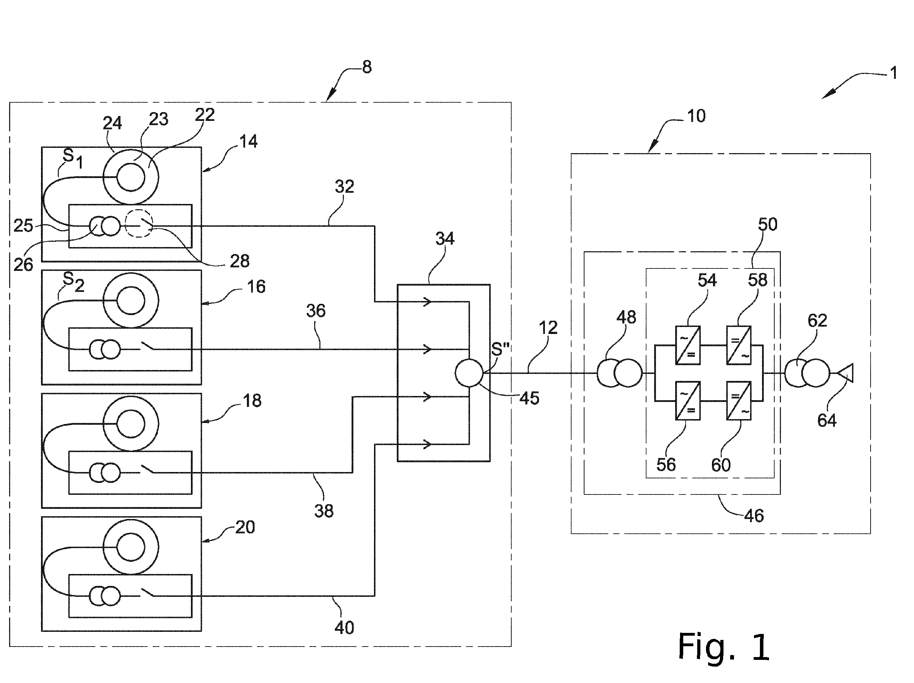

D'autres caractéristiques et avantages de l'invention ressortiront de la description qui en est donnée ci-dessous, à titre indicatif et nullement limitatif, en référence à la figure unique annexée, qui est un exemple d'installation de production d'énergie selon l'invention.

L'invention sera décrite dans sa mise en oeuvre pour une installation de production d'électricité comportant des dispositifs de production d'électricité qui sont des hydroliennes. De manière plus générale, l'invention apporte un avantage pour toute installation de production d'électricité comportant des dispositifs de production d'électricité qui sont placés au moins partiellement dans l'eau.

Dans l'exemple de la figure, l'installation de production d'électricité 1 comprend une partie au moins partiellement immergée 8 et une partie émergée 10, les deux parties étant reliées par un câble électrique apte à transporter un signal électrique alternatif à fréquence variable 12. L'installation 1 est constituée de quatre dispositifs de production d'électricité, 14, 16, 18, 20, ou hydroliennes, qui sont connectés en parallèle, comme expliqué plus en détail ci-après.

Selon un mode de réalisation, les dispositifs de production d'électricité sont connectés en mode « daisy chain », qui réalise une connexion électrique parallèle tout en utilisant un seul câble pour relier les dispositifs.

En variante, une installation de production d'électricité selon l'invention peut comprend un nombre N quelconque d'hydroliennes.

Les hydroliennes fonctionnent grâce à l'énergie d'un cours d'eau ou de courants marins.

Chaque hydrolienne, comme par exemple l'hydrolienne 14, comprend un récepteur mécanique rotatif d'écoulement de flux hydraulique ou une turbine, non représentée dans la figure. La turbine est mécaniquement liée à l'alternateur 22, qui est par exemple une machine électrique synchrone comportant un rotor 23 et au moins un stator 24, les deux éléments étant concentriques avec un stator 24 en forme de couronne circulaire qui entoure le rotor 23 dans le mode de réalisation de la figure. D'autres topologies de placement de l'ensemble rotor-stator(s) de l'alternateur connues sont envisageables en alternative.

Dans un mode de réalisation, le rotor est à aimants permanents.

En variante, des alternateurs asynchrones sont utilisés.

En fonctionnement, la turbine est apte à mettre le rotor en rotation, induisant un ainsi champ électromagnétique dans l'ensemble rotor- stator(s). L'alternateur fournit un signal électrique alternatif.

Un signal électrique est défini par ses paramètres incluant l'intensité de courant, ou plus simplement courant, le niveau de tension ou plus simplement tension. Dans le cas d'un signal alternatif comme par exemple un signal sinusoïdal, les paramètres comprennent également la fréquence, qui est la même pour le courant et pour la tension, et la phase qui est égale à l'angle de déphasage entre le courant et la tension.

L'alternateur 22 synchrone à aimants permanents fournit un signal électrique alternatif S1 à fréquence variable.

Lorsque le signal électrique S1 généré par l'alternateur est dans la plage [110 V, 3.3 kV], le signal électrique S1 obtenu en sortie de l'alternateur 22 est fourni à un circuit 25 comportant un premier transformateur 26, qui augmente la tension du signal électrique S1 et réduit l'intensité de courant associée, tout en maintenant la puissance du signal électrique S1 constante. Le transformateur 26 est un transformateur statique.

Typiquement, le transformateur 26 effectue une transformation de basse tension, typiquement 400V-690V à moyenne tension, typiquement 11KV, donc une augmentation de tension d'un facteur d'environ 25. L'intensité de courant est diminuée du même facteur, pour conserver une puissance constante. Par exemple, le courant passe de 2500 A (Ampères) à 100 A.

Le rôle du transformateur 26 dans ce mode de réalisation est de réduire l'intensité de courant dans une plage de valeurs qui permet un transport aisé par câble électrique sous-marin, sur des distances potentiellement assez grandes, de l'ordre de 1 à 15 km.

Dans le mode de réalisation préféré, lorsqu'on utilise un alternateur permettant de générer un signal électrique haute tension, de l'ordre de 11 kV, le dispositif de production d'électricité 14 ne comprend pas de transformateur 26, ce qui permet de se passer des coûts de ce transformateur.

De plus, le circuit 25 comprend, de manière classique, un interrupteur de sécurité 28 en sortie du transformateur 26 lorsqu'il est présent, qui permet d'isoler le dispositif de production d'électricité 14 en cas de nécessité, comme par exemple en cas de panne ou de dysfonctionnement, afin de l'isoler du reste de l'installation. Lorsque l'interrupteur 28 est actionné, le courant délivré par le dispositif de production 14 à l'installation de production d'électricité est mis à zéro.

En sortie le dispositif de production d'électricité 14 fournit un deuxième signal électrique S'1, qui est le premier signal électrique S1 dans le mode de réalisation sans transformateur 26, dont la tension est comprise entre 10% et 100% de la valeur maximale Vmax, par exemple 11 kV et le courant est compris entre 10% et 100% de a valeur maximale Imax, par exemple 600 A. Ce signal électrique de sortie est un signal électrique alternatif à fréquence variable et à tension variable limitée à une valeur maximale égale à 11kV dans ce mode de réalisation.

Bien entendu, les valeurs maximales de 11 kV et de 600A sont données ici à titre d'exemple, le principe de l'invention restant valide pour des valeurs maximales supérieures.

En sortie du dispositif de production d'électricité 14 est relié à un câble électrique de transport 32, qui est un câble sous-marin dans ce mode de réalisation est qui est apte à transporter le signal électrique S'1 à tension et à fréquence variable vers le dispositif d'interconnexion 34.

Les autres dispositifs de production d'électricité 16, 18, 20, sont analogues au dispositif de production d'électricité 14, et comprennent des éléments analogues, fournissant en sortie respectivement des signaux électriques S'2, S'3 et S'4 à fréquence variable et à tension variable.

Similairement, les signaux électriques S'2, S'3 et S'4 sont acheminés par des câbles électriques de transport respectifs 36, 38, 40 à l'entrée du dispositif d'interconnexion 34.

Les signaux électriques S'1, S'2, S'3 et S'4, à tension variable et à fréquence variable arrivent en entrée du dispositif d'interconnexion 34 et sont interconnectés en parallèle par un coupleur 45. En sortie du coupleur 45, un signal électrique conjoint S" dont l'amplitude de courant est égale à la somme des courants des signaux d'entrée est obtenu. La fréquence du signal électrique conjoint S" varie entre typiquement dans une plage de 1Hz à 100Hz, et sa tension va jusqu'à la tension maximale Vmax, égale à 11kV dans ce mode de réalisation.

Le signal électrique conjoint S" est ensuite transporté sur le câble électrique d'export 12, qui est apte à transporter un signal électrique à fréquence variable et à tension variable vers la partie émergée 10 de l'installation de production d'électricité 1.

Le câble d'export 12 relie le dispositif d'interconnexion 34 à un dispositif de conversion de puissance 46 situé en dehors de l'eau, ce qui facilite sa maintenance.

Avantageusement, un seul câble électrique d'export et un seul dispositif de conversion de puissance hors de l'eau sont nécessaires, quelque soit le nombre de dispositifs de production d'électricité connectés en parallèle.

Le dispositif de conversion de puissance 46 comporte un deuxième transformateur 48 qui a pour rôle de faire décroître la tension du signal électrique conjoint S" afin de le rendre compatible avec l'ensemble de convertisseurs de puissance 50 branché en sortie du transformateur 48.

Typiquement, le transformateur 48 permet de passer d'un signal électrique d'entrée de tension maximale de 11 kV à un signal électrique de sortie de tension maximale égale au niveau de tension maximal du convertisseur, par exemple 690 V, 900V, 1200 V, 2.2 kV, 3.3 kV, 4kV ou 6.6kV, tout en conservant la puissance du signal électrique d'entrée.

Dans le mode de réalisation illustré dans la figure, un ensemble de convertisseurs de puissance branchés en parallèle sur deux branches est utilisé.

En variante, un seul convertisseur, ou un nombre de convertisseurs supérieur à deux est utilisé, le nombre de convertisseurs à utiliser variant en fonction des caractéristiques des convertisseurs utilisés et du nombre de dispositifs de production d'électricité branchés en parallèle.

Plus en détail, l'ensemble de convertisseurs de puissance 50 est constitué de deux sous-ensembles branchés en parallèle, chaque sous-ensemble comportant un premier convertisseur 54 (respectivement 56) qui convertit un signal électrique alternatif en signal électrique continu, et un deuxième convertisseur 58 (respectivement 60), dont l'entrée est reliée à la sortie du premier convertisseur 54, qui convertit le signal électrique continu issu du premier convertisseur en signal électrique alternatif à fréquence fixe et tension fixe apte à être distribué sur un réseau de distribution ou de transport d'électricité. En pratique, les convertisseurs 54, 56 sont des redresseurs actifs quatre-quadrants et les convertisseurs 58, 60 sont de même nature.

Le nombre de sous-ensembles de convertisseurs à brancher en parallèle est dépendant de la puissance du signal électrique conjoint S" issu du câble d'export 12, les plages de fonctionnement des convertisseurs de puissance étant fixées par construction. Typiquement, pour une puissance de l'ordre de 4MW issue de la connexion en parallèle de quatre dispositifs de production d'électricité, deux sous-ensembles de convertisseurs branchés en parallèle, avec des convertisseurs 2MVA / 690V. Plus généralement, le nombre de sous-ensembles de convertisseurs, à plage de fonctionnement des convertisseurs fixée, est dépendant du nombre N de dispositifs de production d'électricité branchés en parallèle, étant donné que la puissance totale fournie est égale à la somme des puissances fournies par chacun des dispositifs de production d'électricité.

La sortie de l'ensemble de convertisseurs est branchée en entrée d'un troisième transformateur 62 qui transforme un signal électrique alternatif à 690V en un signal électrique alternatif à la tension du réseau de distribution ou de transport, typiquement 20kV, et à fréquence égale à la fréquence du réseau de distribution ou de transport d'électricité, donc égale à 50hz en Europe.

Le signal électrique obtenu en sortie du transformateur 62 est fourni au réseau de distribution ou de transport via la liaison 64.

Dans l'installation de production d'électricité 1 décrite, un fonctionnement stable impose une synchronisation de la vitesse et de la fréquence de rotation des rotors des alternateurs branchés en parallèle. L'ensemble de conversion de puissance 50 régule les paramètres du signal électrique à ses bornes, et de ce fait l'ensemble de conversion de puissance 50 agit comme un organe de pilotage qui impose les paramètres du signal électrique conjoint S", et notamment son intensité de courant. Or le signal électrique conjoint S" est issu de la sommation des signaux électriques S'1 à S'4 fournis par chacun des alternateurs.

La régulation de l'intensité de courant du signal électrique conjoint S" entraîne par conséquent la régulation de l'intensité de courant électrique des signaux délivrés par les alternateurs des dispositifs de production d'électricité 14, 16, 18, 20. Par conséquent, pour chaque alternateur, un couple électromagnétique de freinage associé à l'intensité de courant qui est appliqué au rotor de l'alternateur est ajusté, de manière à imposer aux rotors de se synchroniser. La vitesse de rotation de la turbine qui entraîne chaque rotor est identique et proportionnelle à la fréquence électrique pour tous les dispositifs de production d'électricité branchés en parallèle et équipés d'alternateurs synchrones. La vitesse de rotation est très proche [écart inférieur à 5%] pour des turbines connectées en parallèle et équipées d'alternateurs asynchrones.

De manière connue, dans le cas d'un alternateur entraîné par une turbine et relié à un convertisseur de puissance, le convertisseur régule la puissance, de manière à régler l'intensité de courant électrique délivré par l'alternateur permettant d'obtenir un couple électromagnétique de freinage qui permet d'optimiser la vitesse de rotation de la turbine et donc d'obtenir un rendement maximal, c'est-à-dire d'obtenir un maximum d'énergie électrique, mesurée en puissance, par rapport à l'énergie mécanique disponible.

Dans l'installation selon l'invention, plusieurs dispositifs de production d'électricité sont branchés en parallèle. Une méthode de régulation de puissance permettant de piloter l'ensemble de conversion de puissance 50 pour délivrer un signal électrique conjoint S" de puissance maximale est mise en oeuvre. Par exemple, la méthode de régulation décrite dans la demande de brevet FR11.55559 est utilisée. Une telle méthode est typiquement mise en oeuvre par une unité de commande non représentée apte à commander l'ensemble de conversion de puissance 50.

La régulation de l'intensité du courant du signal électrique conjoint S" est répartie sur les courants fournis par les alternateurs des dispositifs de production d'électricité branchés en parallèle, de manière à réguler la moyenne de l'intensité de courant fournie par chaque alternateur.

En variante, on peut utiliser d'autres méthodes connues pour piloter un convertisseur de puissance relié à un seul alternateur et permettant de faire fonctionner un unique alternateur à son point de fonctionnement optimal, de manière à obtenir une régulation de puissance de la moyenne des alternateurs connectés en parallèle, en considérant que les alternateurs connectés en parallèle ont un fonctionnement analogue à un seul alternateur « moyen » dont les caractéristiques électriques se retrouvent en faisant la moyenne des caractéristiques de chaque alternateur connecté. Les méthodes peuvent être par exemple des méthodes à base d'observateur numérique.

Il est à noter que, contrairement à une installation classique dans laquelle chaque dispositif de production d'électricité dispose de son propre convertisseur de puissance, dans laquelle chaque dispositif de production d'électricité fonctionne à rendement optimal en fonction des écoulements de flux fournissant l'énergie mécanique, dans l'installation selon l'invention le rendement de chaque dispositif de production d'électricité est optimisé en moyenne.

De fait, une légère perte en termes de rendement par rapport à un fonctionnement sans branchement en parallèle des dispositifs de production d'électricité a lieu. Néanmoins les inventeurs ont constaté par des simulations que la perte de rendement est faible.

Il apparaît aussi que même avec des variations assez importantes en termes de vitesse d'écoulement du flux hydraulique local, la perte en puissance électrique globale obtenue est faible.

De même, il a été constaté que pour de faibles différences sur les caractéristiques des alternateurs connectés en parallèle, la perte en termes de puissance électrique totale produite est également faible.

Avantageusement, une installation de production d'électricité telle que proposée permet de diminuer les coûts d'installation et de maintenance, tout en conservant un système stable et avec une faible perte en termes de puissance électrique totale générée par rapport à un système classique bien plus coûteux en installation et maintenance.

## Revendications

1. Installation de production d'électricité (1) comportant une pluralité de dispositifs de production d'électricité (14, 16, 18, 20) au moins partiellement immergés dans l'eau, aptes à transformer de l'énergie mécanique fournie par un écoulement de flux en énergie électrique, chaque dispositif de production d'électricité comprenant un récepteur mécanique rotatif apte à être mis en rotation par l'écoulement de flux et un alternateur (22) comprenant au moins un rotor (23) et au moins un stator (24), un rotor de l'alternateur étant apte à être mis en rotation par le récepteur mécanique rotatif,
**caractérisée en ce que :**
- chaque dispositif de production d'électricité (14, 16, 18, 20) produit un signal électrique alternatif (S'1, S'2, S'3, S'4) à tension et fréquence variables transporté par un câble électrique de transport (32, 36, 38, 40) au moins partiellement immergé,
et **en ce que** l'installation comprend en outre :
- un dispositif d'interconnexion (34) auquel sont connectés en entrée, en parallèle, les câbles électriques de transport (32, 36, 38, 40) issus de chaque dispositif de production d'électricité (14, 16, 18, 20), et qui fournit en sortie un signal électrique conjoint (S"), ledit signal électrique conjoint étant un signal électrique alternatif (S") à fréquence et tension variable, dont l'amplitude en courant est égale à la somme des courants d'entrée,
- un câble d'export (12) partiellement immergé, reliant la sortie du dispositif d'interconnexion (34) à un dispositif de conversion de puissance (46) hors de l'eau, ledit dispositif de conversion de puissance (46) étant apte à transformer le signal électrique conjoint (S") en un signal électrique alternatif à fréquence fixe destiné à un réseau de distribution ou de transport d'électricité.

2. Installation de production d'électricité selon la revendication 1, **caractérisée en ce que** chaque dispositif de production d'électricité comporte un alternateur (22) synchrone à aimants permanents.

3. Installation de production d'électricité selon la revendication 1, **caractérisée en ce que** chaque dispositif de production d'électricité comporte un alternateur (22) asynchrone.

4. Installation de production d'électricité selon l'une quelconque des revendications 1 à 3, **caractérisée en ce que** chaque dispositif de production d'électricité comprend un transformateur (26) relié à la sortie de l'alternateur (22) et apte à augmenter la tension et à réduire l'intensité de courant du signal électrique (S1) fourni par l'alternateur (22).

5. Installation de production d'électricité selon l'une quelconque des revendications 1 à 4, **caractérisée en ce que** le dispositif de conversion de puissance comprend un transformateur (48) apte à réduire la tension et à augmenter l'intensité de courant du signal électrique alternatif à fréquence variable (S") fourni en entrée du dispositif de conversion de puissance.

6. Installation de production d'électricité selon l'une quelconque des revendications 1 à 5, **caractérisée en ce que** le dispositif de conversion de puissance (46) comporte un ensemble de conversion de puissance (50) composé d'au moins un premier convertisseur (54, 56) apte à convertir un signal électrique d'entrée alternatif à fréquence variable et tension variable en un signal électrique de sortie continu, et un deuxième convertisseur (58, 60), dont l'entrée est branchée sur la sortie dudit premier convertisseur, apte à convertir un signal d'entrée continu en un signal de sortie alternatif à fréquence fixe.

7. Installation de production d'électricité selon la revendication 6, **caractérisée en ce que** ledit ensemble de conversion de puissance (50) comporte un sous-ensemble ou plusieurs sous-ensembles branchés électriquement en parallèle, chaque sous-ensemble comportant un dit premier convertisseur (54-56) et un dit deuxième convertisseur (58, 60).

8. Installation de production d'électricité selon l'une quelconque des revendications 1 à 7, **caractérisée en ce que** ledit dispositif de conversion de puissance (48) comporte des moyens de mise en oeuvre d'une méthode de régulation de puissance, apte à moduler des paramètres du signal électrique conjoint (S") issu dudit dispositif d'interconnexion (34).

9. Installation de production d'électricité selon la revendication 8, dans laquelle lesdits moyens de mise en oeuvre d'une méthode de régulation de puissance sont aptes à imposer l'intensité de courant du signal électrique conjoint (S"), entraînant une régulation de la moyenne de l'intensité de courant du signal électrique alternatif (S'1, S'2, S'3, S'4) fourni par chaque dispositif de production d'électricité (14, 16, 18, 20) et une synchronisation en fréquence desdits signaux électriques alternatifs.
